Europäisches Patentamt

European Patent Office

Office européen des brevets

(11) Numéro de publication: **0 012 655**
**A1**

# (12) DEMANDE DE BREVET EUROPEEN

(21) Numéro de dépôt: **79400938.1**

(22) Date de dépôt: **30.11.79**

(51) Int. Cl.³: **G 21 C 17/00**, G 01 N 29/00

(30) Priorité: **06.12.78 FR 7834356**

(43) Date de publication de la demande: **25.06.80**
**Bulletin 80/13**

(84) Etats contractants désignés: **BE DE GB IT NL**

(71) Demandeur: **NOVATOME, 20 Avenue Edouard Herriot, F-92350 Le Plessis Robinson (FR)**

(72) Inventeur: **Martin, Jean, 5 rue Corot, F-92320 Chatillon (FR)**

(74) Mandataire: **Bouget, Lucien et al, CREUSOT-LOIRE 15 rue Pasquier, F-75008 Paris (FR)**

(54) Véhicule de déplacement d'un outil ou d'un moyen de contrôle en appui sur une seule surface orientée dans une direction quelconque.

(57) Un véhicule de déplacement d'un outil ou d'un moyen de contrôle en appui sur une seule surface d'orientation quelconque par rapport à la verticale comportant des roues motrices et directrices (12, 13, 14) et des moyens permettant son maintien contre la surface d'appui. Les moyens de maintien sont constitués par au moins un caisson rigide (3) ouvert sur une de ses faces solidaire sur le pourtour de cette face d'une jupe d'étanchéité souple (10) destinée à venir en contact avec la surface d'appui (1) et un moyen d'aspiration (11) relié au caisson (3) pour créer une dépression dans ce caisson (3). Le dispositif est maintenu contre la surface d'appui (1) par l'application sur le caisson (3) de la pression différentielle entre la pression atmosphérique et la pression régant dans le caisson (3).

L'invention s'applique, en particulier, au contrôle des cuves de réacteurs nucléaires.

EP 0 012 655 A1

1

"Véhicule de déplacement d'un outil ou d'un moyen de contrôle en appui sur une seule surface d'orientation quelconque"

L'invention concerne un dispositif de déplacement d'un outil ou d'un moyen de contrôle en appui sur une seule surface d'orientation quelconque par rapport à la verticale de telle sorte que le dispositif reste en contact avec cette surface d'appui quelle que soit son inclinaison et qu'il puisse se déplacer de façon continue suivant un trajet quelconque.

Dans les réacteurs nucléaires, il est nécessaire d'inspecter les principaux composants et tout particulièrement les cuves, aussi bien à l'issue du cycle de fabrication qu'en cours d'utilisation ou pendant les périodes réservées à l'entretien des installations.

Ces opérations d'inspection sont rendues difficiles par les conditions dans lesquelles elles doivent se dérouler puisqu'en service la plupart des composants du réacteur sont à haute température, qu'à l'arrêt, ou après une période de fonctionnement d'une certaine durée, ces composants sont radio-actifs et que de toute façon l'accessibilité directe à la plupart de ces composants est extrêmement difficile, étant donnée la géométrie du réacteur.

Dans la plupart des cas il est tout-à-fait exclu de faire effectuer ces opérations de contrôle par un opérateur et il est nécessaire de disposer d'un véhicule permettant de faire les inspections avec commande à distance, cette inspection pouvant être complétée par une intervention télécommandée, telle qu'un usinage ou une réparation effectuée grâce à un outil transporté par le véhicule télécommandé.

On a donc imaginé des dispositifs capables de se déplacer sur des surfaces de grandes dimensions telles que des cuves de réacteurs nucléaires et pouvant assurer le transport d'un moyen de contrôle ou d'un outil à un endroit quelconque de la cuve où cet outil ou ce moyen de contrôle sont nécessaires.

On connaît par exemple un dispositif comportant un chariot de déplacement muni de roues orientables autour d'un axe perpendiculaire à l'axe de rotation des roues en déplacement et à la surface d'appui où l'on effectue le contrôle ou l'usinage. Ce chariot est maintenu contre la surface où se déplace le chariot par des bras d'appui dont les extrémités s'appuient et roulent sur une surface disposée à peu près parallèlement à la surface où

2

l'on effectue le contrôle.

Un tel dispositif est applicable dans le cas de cuves de certains réacteurs à neutrons rapides où il existe deux enceintes métalliques de grandes dimensions disposées avec un écartement variant peu.

Cependant, même dans ce cas, où la géométrie des installations se prête bien à l'utilisation d'un véhicule à bras d'appui, les différences d'écartement entre les deux parois peuvent être plus importantes et nécessiter des bras d'appui d'une dimension telle que le dispositif devient complexe et onéreux. Ce type de véhicule ne convient pas non plus aux surfaces trop rapprochées, les bras d'appui étant alors trop obliques.

On connaît également des dispositifs utilisant des ventouses pour réaliser l'accrochage du dispositif de déplacement sur une seule surface d'appui, mais il est bien évident que de tels dispositifs ne peuvent effectuer qu'un déplacement discontinu et relativement lent. Ceci présente des inconvénients dans le cas des installations de très grandes dimensions.

On connaît d'autres modes d'accrochage d'un dispositif de déplacement sur une surface, par exemple des dispositifs d'accrochage comportant des aimants ou des électro-aimants, mais ces dispositifs nécessitent évidemment la présence de surfaces magnétiques, ce qui n'est pas le cas de cuves ou de composants réalisés en acier inoxydable austénitique ou revêtus de ce type d'acier. D'autre part, dans tous les cas envisagés, les dispositifs de déplacement s'accomodent mal de surfaces extrêmement rugueuses ou extrêmement irrégulières. En particulier, les dispositifs à ventouses ou à accrochage magnétique sont souvent inopérants dans ce cas de surfaces rugueuses ou irrégulières.

Le but de l'invention est donc de proposer un véhicule de déplacement d'un outil ou d'un moyen de contrôle en appui sur une surface d'orientation quelconque par rapport à la verticale, restant en contact permanent avec cette surface d'appui et pouvant se déplacer de façon continue, suivant un trajet quelconque, comportant un support pour l'outil ou le moyen de contrôle muni de moyens de maintien du véhicule contre la surface et portant un ensemble de roues motrices pour le déplacement sur la surface d'appui reliées à des moyens permettant de les orienter autour d'axes perpendiculaires à leur axe de rotation, ce dispositif devant permettre de réaliser des déplacements relativement rapides, avec des changements de direction quelconques sur des surfaces rugueuses ou irrégulières.

Dans ce but, les moyens de maintien contre la surface sont constitués par :

0012655

3

- au moins un caisson rigide ouvert sur une de ses faces destinée à se déplacer au voisinage de la surface d'appui et solidaire sur le pourtour de cette face ouverte d'une jupe d'étanchéité souple destinée à venir en contact avec la surface d'appui,

- et un moyen d'aspiration relié au caisson pour créer une dépression dans ce caisson,

le caisson étant maintenu par l'application sur sa surface externe de la pression différentielle entre la pression atmosphèrique et celle régnant dans le caisson contre la surface d'appui par l'intermédiaire d'au moins trois roues motrices et directrices maintenant un écartement sensiblement constant entre le caisson et la surface d'appui.

On va maintenant décrire, en se référant aux figures jointes en annexe, quelques modes de réalisation de dispositifs de déplacement suivant l'invention permettant le déplacement d'un moyen de contrôle sur une surface de grande dimension.

La figure 1 est une vue en élévation avec coupe partielle d'un dispositif de déplacement suivant l'invention comportant un seul caisson.

La figure 2 est une vue de dessus du dispositif représenté à la figure 1.

La figure 3 est un schéma montrant les forces appliquées sur le chariot en position sur la surface d'appui.

La figure 4 est une vue en élévation avec coupe partielle d'un dispositif de déplacement comportant trois caissons rectangulaires.

La figure 5 est une vue de dessus du dispositif représenté à la figure 4.

La figure 6 est une vue de dessus d'un dispositif comportant trois caissons de forme cylindrique à section circulaire.

La figure 7 est une vue de dessus d'un dispositif de déplacement comportant quatre caissons cylindriques à section circulaire.

La figure 8 est une vue de dessus d'une variante de réalisation du dispositif représenté à la figure 1 comportant un moyen d'aspiration relié au caisson rigide.

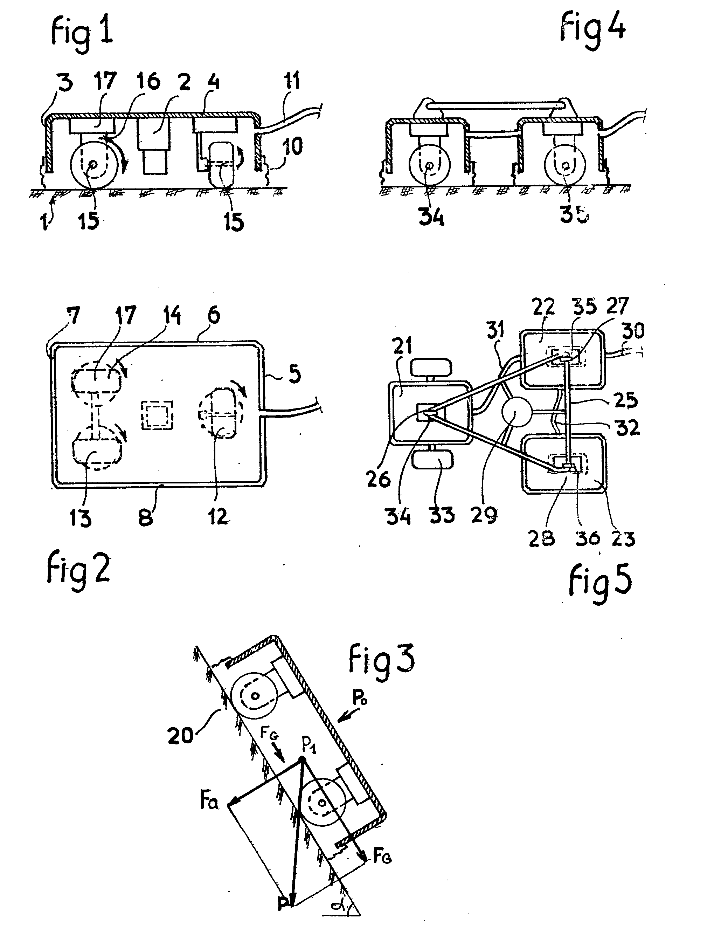

Sur la figure 1, on voit une surface d'appui 1 sur laquelle se déplace le véhicule de transport d'un moyen de contrôle constitué par un capteur 2 perpendiculaire à la surface à explorer, fixé sur un caissson rigide et plat 3 également visible àla figure 2 et comportant une face supérieure 4 sur laquelle est fixé le capteur et quatre faces latérales 5, 6, 7 et 8.

4

Une jupe d'étanchéité 10 est fixée sur le pourtour de la face ouverte du caisson 3, c'est-à-dire sur les extrémités inférieures des parois latérales 5, 6, 7 et 8.

Cette jupe d'étanchéité est constituée par une bande en élastomère collée contre les surfaces latérales du caisson.

Une tuyauterie 11 est fixée à la partie supérieure du caisson rigide 3 et cette conduite souple 11 est réunie à une pompe à vide permettant d'aspirer l'atmosphère intérieure du caisson 3.

Trois roues motrices et directrices 12, 13 et 14 permettant le déplacement du dispositif sur la surface d'appui 1 sont d'autre part fixées à l'intérieur du caisson rigide 3, leurs axes de rotation 15 solidaires d'un support 16 étant reliés à une couronne 17 permettant l'orientation des roues autour d'un axe perpendiculaire à l'axe 15, vertical sur la figure 1.

Les roues sont d'autre part entraînées par un dispositif moteur non représenté alors que les couronnes 17 sont également actionnées par un dispositif moteur permettant les changements de direction du chariot, et également non représenté.

Sur la figure 3, on voit un véhicule identique au véhicule représenté sur les figures 1 et 2 disposé en appui sur une surface inclinée 20 et subissant un ensemble de forces représentées de façon conventionnelle à la figure 3.

Ces forces sont d'une part le poids P du véhicule et de l'outillage qu'il transporte et d'autre part la force d'application Fa créée par la différence de pression entre la pression atmosphérique sur la surface externe du caisson et la pression à l'intérieur du caisson (puisque la pression atmosphérique Po est supérieure à la pression P1 dans le caisson) et la force d'entraînement exercée par les roues soumises à un coupe Ct.

La force de glissement tendant à entraîner le véhicule vers le bas est égale à P x Sin$\alpha$, si l'on désigne par $\alpha$ l'angle du plan sur lequel se déplace le véhicule avec le plan horizontal.

La condition d'équilibre est donc que Fa x f, si l'on désigne par f le coefficient d'adhérence des roues soit supérieur à -P sin$\alpha$.

D'autre part le couple Ct exercé sur les roues doit être spérieur ou égal à P sin$\alpha$ x f pour que ce couple moteur puisse s'opposer au déplacement du véhicule vers le bas sous l'effet de la pesanteur ou pour que le véhicule puisse être entraîné vers le haut.

En choisissant les dimensions de la face supérieure du caisson rigide et la valeur de la pression résiduelle interne P1, on a donc la possibilité

5

de règler la force Fa à une valeur suffisante pour assurer le maintien du véhicule, à partir du moment où le couple moteur exercé sur les roues est suffisant ou encore si le mouvement de ces roues n'est possible que dans un seul sens, leur motorisation étant irréversible. Dans ce dernier cas, Ct représente le couple résistant ou couple d'irréversibilité sur les roues.

On voit donc, qu'en choisissant les dimensions du caisson et la pression résiduelle interne ainsi que le couple moteur ou le couple d'irréversibilité exercé sur les roues, on peut, quelle que soit l'inclinaison de la paroi, concevoir un véhicule restant en contact constant avec cette paroi et susceptible de s'y déplacer. En particulier un tel véhicule peut aussi fonctionner à " l'envers ", c'est-à-dire sur une surface horizontale tournée vers le bas.

Il est évidemment nécessaire de réunir le caisson à une installation d'aspiration par un tube souple 11 qui est amené à se dérouler derrière le chariot lorsque celui-ci s'éloigne sur la paroi.

De même il est nécessaire de prévoir une alimentation électrique des moteurs d'orientation des roues et des moteurs d'entraînement de ces roues portées par le caisson rigide. L'orientation des roues autour d'un axe perpendiculaire à la paroi et à l'axe de rotation de ces roues, permet de faire effectuer au véhicule des trajets quelconques sur la paroi pour emmener le capteur de contrôle 2 aux endroits où l'on doit effectuer des vérifications, par exemple relatives à l'état du matériau ou de ses soudures ou encore aux points à observer avec une caméra de télévision.

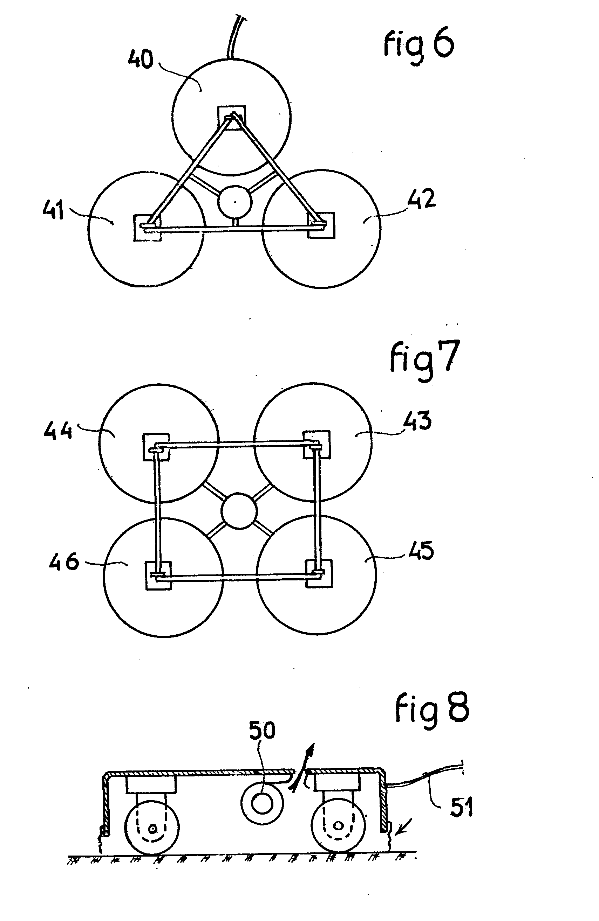

On voit sur les figures 4 et 5 un autre mode de réalisation du dispositif de déplacement suivant l'invention où les moyens de maintien du dispositif contre la paroi sont constitués par trois caissons identiques aux caissons représentés sur les figures 1 et 2, 21, 22, 23. Pour relier entre eux les caissons 21, 22, et 23 on a relié à la partie supérieure des caissons rigides un bâti de liaison triangulaire 25 dont les points de liaison avec les caissons 26, 27 et 28 sont constitués par des rotules dont une partie est solidaire du bâti 25 et l'autre partie de la face supérieure des caissons rigides 21, 22 et 23.

Le capteur 29 est relié à la partie centrale du dispositif par des barres de liaison rigides fixées sur le bâti 25.

L'un des caissons (22) est relié à une conduite d'aspiration souple 30 cependant que les caissons 21 et 23 sont reliés au caisson 22 par des conduites 31 et 32 permettant d'aspirer l'air dans ces caissons 21 et 23 à partir de l'aspiration créée dans le caisson 22.

6

A l'intérieur de chaque caisson 21, 22 et 23 sont montées des roues 34, 35 et 36 orientables autour de l'axe perpendiculaire à la paroi lorsque le véhicule est en position sur cette paroi et à l'axe de rotation des roues.

Comme dans le cas précédent, ces roues permettent d'une part de maintenir un espacement sensiblement constant entre le caisson et la paroi en supportant la force exercée par la résultante des pressions sur les caissons et d'autre part d'entraîner le véhicule en le déplaçant dans une direction quelconque grâce à leur orientation autour de l'axe perpendiculaire à la paroi et à leur motorisation.

On voit sur la figure 6 un dispositif pratiquement identique à celui représenté sur les figures 4 et 5, à cette différence près que les caissons 40, 41 et 42 ont la forme/de cylindres à base circulaire et non la forme de parallélépipèdes.

On voit sur la figure 7 un autre dispositif du même type comportant quatre caissons cylindriques à base circulaire 43, 44, 45, et 46.

Tous les dispositifs, représentés aux figures 4 à 7 ont la particularité d'avoir des caissons auxquels est associée une seule roue.

Le nombre total de roues doit cependant être égal ou supérieur à trois dans tous les cas. Ceci peut se réaliser en disposant plusieurs roues à l'intérieur du ou des caissons ou en disposant un nombre de caissons plus grand ou égal à 3 auxquels est associée une seule roue.

A la figure 8 on voit un dispositif pratiquement identique au dispositif des figures 1 et 2 à ceci près qu'il comporte un dispositif d'aspiration 50 solidaire de la partie supérieure du caisson rigide, ce dispositif d'aspiration pouvant être alimenté en courant électrique par une alimentation 51 réalisant en même temps l'alimentation des moteurs d'orientation et de mise en rotation des roues.

Dans tous les autres cas, on comprend qu'il est possible de créer une dépression en-dessous du caisson disposé sur la surface d'appui, grâce à la jupe telle que 10 qui vient s'appliquer sur la surface d'appui pour réduire les fuites le plus possible tout en permettant un déplacement du caisson par rapport à la surface par glissement de la jupe souple sur la surface d'appui.

Il est possible de créer une jonction relativement étanche entre la surface et le caisson, dans la plupart des cas, car la jupe souple peut venir s'appliquer sur toute sa longueur avec une certaine pression sur cette surface d'appui.

Il est ainsi possible d'utiliser un système de création d'une aspiration relativement léger puisque d'une part on peut assurer une assez bonne étanchéité entre la jupe et la paroi et que d'autre part en augmentant la surface du caisson on peut obtenir une force d'application importante tout en en créant qu'une légère dépression sos le caisson.

Il est à remarquer cependant que le frottement de la jupe sur la paroi produit une certaine résistance aux déplacements du véhicule. Toutefois cette force résistante est directement proportionnelle au périmètre du caisson (ou à la somme des périmètres des caissons) alors que la force d'application du caisson contre la paroi, donc aussi la force d'adhérence et la force de propulsion par les roues, est proportionnelle à la surface de ce caisson. Lorsqu'on augmente les dimensions du caisson (ou des caissons) la force d'application et donc la force de propulsion augmente beaucoup plus vite que la force de frottement de la jupe sur la paroi. La force de frottement de la jupe est donc d'autant plus faible par rapport à la force d'application et à la force de propulsion que l'engin est plus grand.

Il est bien évident que l'invention ne se limite pas aux modes de réalisation qui ont été décrits mais qu'elle en comporte au contraire toutes les variantes et qu'on peut imaginer des modifications de points de détail sans pour autant sortir du cadre de l'invention.

C'est ainsi qu'on a décrit les dispositifs comportant tous des roues fixées sur le caisson rigide mais qu'il est possible également de concevoir des dispositifs comportant des roues fixées sur le bâti lui-même relié de façon rigide ou articulée aux caissons.

On a décrit des modes de réalisation où les caissons étaient de forme parallèlépipèdique ou cylindrique au nombre de 1, 3 ou 4 mais il est possible d'imaginer des caissons de forme quelconque et en nombre quelconque associés à des roues dont le nombre n'est également pas limité mais qui doit être cependant supérieur à 3.

On a également décrit deux modes de réalisation de l'aspiration soit par une conduite souple reliée à une installation d'aspiration fixe soit par une pompe disposée sous le caisson mais il est bien évident qu'on peut réaliser cette aspiration par tout moyen approprié tel que pompe d'un type quelconque ou trompe ou tout autre dispositif permettant une aspiration d'air avec un débit même relativement limité.

D'autre part il est bien évident que le mode de réalisation du bâti et du ou des caissons constituant le dispositif de maintien du véhicule

0012655

8

sur la paroi dépend de la forme de cette paroi, de sa rugosité ou des irrégularités quipeuvent se présenter lors du déplacement du véhicule. Un bâti articulé et associé à un ensemble de plusieurs caissons est en particulier bien adapté aux cas d'une surface courbe ou irréfulière.

Enfin les exemples de réalisation qui ont été donnés concernaient des véhicules destinés aux déplacements de moyens de contrôle ou d'examen optique direct de la surface de la paroi mais il est bien évident que de tels véhicules peuvent servir aux déplacements d'outils d'usinage ou de soudage ou encore d'autres types de matériels pour réaliser des opérations quelconques sur la paroi d'appui ou sur des organes fixés sur cette paroi ou disposés au voisinage de cette paroi.

Il est bien évident que le dispositif de déplacement suivant l'invention peut servir non seulement à l'inspection des parois et des organes des réacteurs nucléaires mais à l'inspection ou à l'usinage des parois de réacteurs chimiques ou d'autres dispositifs de grandes dimensions utilisés dans l'industrie.

Il est bien évident également que le dispositif suivant l'invention peut comporter une source de courant électrique solidaire du véhicule pour l'alimentation des moteurs d'entraînement et d'orientation des roues et éventuellement du dispositif d'aspiration porté par le caisson. Dans ce cas, aucun câble accompagnant le véhicule n'est nécessaire et l'on peut réaliser la commande des mouvements de ce véhicule et des travaux de contrôle ou d'usinage à effectuer par télécommande.

9

REVENDICATIONS.

1- Véhicule de déplacement d'un outil ou d'unmoyen de contrôle en appui sur une seule surface d'orientation quelconque par rapport à la verticale, restant en contact avec cette surface d'appui quelle que soit son inclinaison et pouvant se déplacer de façon continue, suivant un trajet quelconque, comportant un support pour l'outil ou le moyen de contrôle muni de moyens de maintien du véhicule contre la surface et portant un ensemble de roues motrices pour le déplacement sur la surface d'appui reliées à des moyens permettant de les orienter autour d'axes perpendiculaires à leur axe de rotation et à la surface d'appui, caractérisé par le fait que les moyens de maintien contre la surface sont consitués par :

- au moins un caisson rigide 3 ouvert sur une de ses faces destiné à se déplacer au voisinage de la surface d'appui 1 et solidaire sur le pourtour de cette face ouverte d'une jupe d'étanchéité souple10 destinée à venir en contact avec la surface d'appui,

- et un moyen d'aspiration 11 relié au caisson pour créer une dépression dans ce caisson,

le dispositif étant maintenu par l'application sur la surface externe du caisson 3 de la pression différentielle entre la pression atmosphérique et celle régnant dans le caisson 3 contre la surface d'appui 1 par l'intermédiaire d'au moins trois roues motrices et directrices 12, 13, 14 maintenant un écartement sensiblement constant entre le caisson 3 et la surface d'appui 1.

2- Véhicule de déplacement suivant la revendication 1, caractérisé. par le fait que le caisson 3 est de forme parallélépipèdique plate comportant deux faces de grande dimension dont l'une constitue la face ouverte et l'autre la face de support sur laquelle sont fixés l'outil ou le dispositif de contrôle 2 et les axes de pivotement 17 perpendiculairesaux axes de rotation 15 de trois roues 12, 13, 14. disposées à l'intérieur du caisson.

3- Véhicule de déplacement suivant la revendication 1, caractérisé par le fait que les moyens de maintien du dispositif contre la surface d'appui sont consitués par un ensemble d'au moins trois caissons 21, 22, 23 rigides équipés de jupes d'étanchéité et réunis entre eux par un bâti 25 relié à chacun des caissons par l'intermédiaire de rotules 26, 27, 28.

4- Véhicule de déplacement suivant la revendication 3, caractérisé par le fait qu'à l'intérieur de chacun des caissons 21, 22, 23 est disposée une roue dont l'axe de pivotement perpendiculaire à l'axe de rotation est relié aux caissons rigides 21, 22, 23.

5- Véhicule suivant l'une quelconque des revendications 3 et 4, caractérisé par le fait que l'outil ou le moyen de contrôle 29 sont supportés par le bâti 25.

6- Véhicule de déplacement suivant l'une quelconque des revendications 1 à 5 caractérisé par le fait que le moyen d'aspiration relié aux caissons est constitué par une conduite souple 11,30 reliée à une de ses extrémités aux caissons 3,22 et à son autre extrémité à une installation d'aspiration fixe.

7- Véhicule de déplacement suivant l'une quelconque des revendications 1 à 5 caractérisé par le fait que les moyens d'aspiration reliés aux caissons sont constitués par un dispositif d'aspiration 50 porté par le caisson rigide et alimenté en énergie électrique par un câble souple 51 relié au caisson et l'accompagnant dans ses déplacements.

fig 1

fig 4

fig 2

fig 5

fig 3

0012655

2/2

fig 6

40
41
42

fig 7

44
43
46
45

fig 8

50
51

# 0012655

Office européen
des brevets

## RAPPORT DE RECHERCHE EUROPEENNE

Numéro de la demande

**EP 79 40 0938**

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | FR - A - 2 267 612 (C.E.A.)<br>* Revendication 1; figures 1,2 * | 1,6 | G 21 C 17/00<br>G 01 N 29/00 |
| A | US - A - 3 999 423 (TYREE)<br>* Résumé; figure 1 * | 1,6 | |
| A | US - A - 4 010 636 (CLARK)<br>* Résumé; figure 4 * | 1,6 | |
| A | DE - A - 2 709 023 (INTERATOM)<br>* Revendication 1; figure 1 * | 1,6 | DOMAINES TECHNIQUES RECHERCHES (Int. Cl. ³)<br><br>G 21 C 17/00<br>G 01 M 3/00<br>G 01 N 29/00 |
| A | US - A - 3 628 375 (PAGANO)<br>* Résumé; figure 1 * | 1,6 | |
| A | GB - A - 908 728 (T.I.)<br>* Page 1, lignes 43-55; figure 1 * | 1,6 | |

CATEGORIE DES DOCUMENTS CITES

X: particulièrement pertinent

A: arrière-plan technologique

O: divulgation non-ecrite

P: document intercalaire

T: théorie ou principe à la base de l'invention

E: demande faisant interférence

D: document cite dans la demande

L: document cite pour d'autres raisons

&: membre de la même famille, document correspondant

Le present rapport de recherche a ete etabli pour toutes les revendications

| Lieu de la recherche | Date d'achevement de la recherche | Examinateur |
|---|---|---|
| La Haye | 12-03-1980 | KAVCIC |

OEB Form 1503.1  06.78